# EUROPEAN PATENT APPLICATION

(11) **EP 4 607 991 A1**
(43) Date of publication of application: **27.08.2025**
(21) Application number: 22962388.9
(22) Date of filing: 19.10.2022
(51) Int. Cl.: H04W 24/02, H04W 72/00

(54) **SENSING INFORMATION REPORTING METHOD AND DEVICE**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Mewburn Ellis LLP
(86) International application number: PCT/CN2022/126291
(87) International publication number: WO 2024/082198

(57) **Abstract**

The present disclosure relates to a method for reporting sensing information and devices. The method includes the following. A terminal device receives first configuration information, where the first configuration information indicates a sensing information reporting event. In the embodiments of the present disclosure, using the sensing information reporting event helps to more reasonably report sensing information, thereby reducing unnecessary overhead for reporting.

## Description

### TECHNICAL FIELD

The present disclosure relates to the field of communications, and more specifically, to a method for reporting sensing information and a device.

### BACKGROUND

By adding a sensing function (SF) and corresponding processes, sensing functionalities can be supported in the 3rd generation partnership project (3GPP) network. Sensing measurements have the characteristics of large data volume and small variation difference and so on, and thus by means of periodic transmission, there may be a large number of redundant sensing measurements, which may increase overhead of data and/or signaling for transmission.

### SUMMARY

Embodiments of the present disclosure provide a method for reporting sensing information. The method includes receiving, by a first communication device, first configuration information, where the first configuration information indicates a sensing information reporting event.

Embodiments of the present disclosure provide a method for reporting sensing information. The method includes sending, by a second communication device, first configuration information, where the first configuration information indicates a sensing information reporting event.

Embodiments of the present disclosure provide a first communication device. The first communication device includes a first receiving unit configured to receive first configuration information, where the first configuration information indicates a sensing information reporting event.

Embodiments of the present disclosure provide a second communication device. The second communication device includes a first sending unit configured to send first configuration information, where the first configuration information indicates a sensing information reporting event.

Embodiments of the present disclosure provide a communication device, including a processor and a memory. The memory is configured to store a computer program. The processor is configured to call and run the computer program stored in the memory, to enable the communication device to execute the above-mentioned method for reporting sensing information.

Embodiments of the present disclosure provide a chip for implementing the above-mentioned method for reporting sensing information.

Specifically, the chip includes a processor configured to call and run a computer program in a memory, to enable a device equipped with the chip to execute the above-mentioned method for reporting sensing information.

Embodiments of the present disclosure provide a computer-readable storage medium for storing a computer program. When the computer program is executed by a device, the device executes the above-mentioned method for reporting sensing information.

Embodiments of the present disclosure provide a computer program product including computer program instructions. The computer program instructions enable a computer to execute the above-mentioned method for reporting sensing information.

Embodiments of the present disclosure provide a computer program which, when executed on a computer, enables the computer to execute the above-mentioned method for reporting sensing information.

In the embodiments of the present disclosure, using the sensing information reporting event helps to more reasonably report sensing information, thereby reducing unnecessary overhead for reporting.

### BRIEF DESCRIPTION OF THE DRAWINGS

FIG. 1 is a schematic diagram of an application scenario according to embodiments of the present disclosure.
FIG. 2 is a schematic diagram of a fifth-generation (5G) system architecture.
FIG. 3 is a flow chart of per-user equipment (UE) sensing.
FIG. 4 is a flow chart of per-area sensing.
FIG. 5 is a schematic diagram of configuration and measurement of a sounding reference signal (SRS) and positioning reference signal (PRS).
FIG. 6 is a schematic diagram of a UE positioning measurements reporting process.
FIG. 7 is a schematic flow chart of a method for reporting sensing information according to an embodiment of the present disclosure.
FIG. 8 is a schematic flow chart of a method for reporting sensing information according to another embodiment of the present disclosure.
FIG. 9 is a schematic flow chart of a method for reporting sensing information according to another embodiment of the present disclosure.
FIG. 10 is a schematic flow chart of a method for reporting sensing information according to another embodiment of the present disclosure.
FIG. 11 is a schematic diagram of an example of a sensing process according to embodiments of the present disclosure.
FIG. 12 is a schematic block diagram of a first communication device according to an embodiment of the present disclosure.
FIG. 13 is a schematic block diagram of a first communication device according to an embodiment of the present disclosure.
FIG. 14 is a schematic block diagram of a second communication device according to an embodiment of the present disclosure.
FIG. 15 is a schematic block diagram of a second communication device according to an embodiment of the present disclosure.
FIG. 16 is a schematic block diagram of a communication device according to embodiments of the present disclosure.
FIG. 17 is a schematic block diagram of a chip according to embodiments of the present disclosure.
FIG. 18 is a schematic block diagram of a communication system according to embodiments of the present disclosure.

### DETAILED DESCRIPTION

The technical solutions in the embodiments of the present disclosure will be described below in conjunction with the drawings in the embodiments of the present disclosure.

The technical solutions of the embodiments of the present disclosure can be applied to various communication systems, such as: a global system of mobile communication (GSM), a code division multiple access (CDMA) system, a wideband code division multiple access (WCDMA) system, general packet radio service (GPRS), a long term evolution (LTE) system, an advanced long term evolution (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a fifth-generation (5G) system or other communication systems, etc.

Generally speaking, traditional communication systems support a limited number of connections and are easy to be implemented. However, with the development of communication technology, mobile communication systems will not only support traditional communications, but will also support, for example, device to device (D2D) communication, machine to machine (M2M) communication, machine type communication (MTC), vehicle to vehicle (V2V) communication, or vehicle to everything (V2X) communication, etc. The embodiments of the present disclosure can also be applied to these communication systems.

In an embodiment, the communication system in the embodiments of the present disclosure can be applied to a carrier aggregation (CA) scenario, a dual connectivity (DC) scenario, or a standalone (SA) scenario.

In an embodiment, the communication system in the embodiments of the present disclosure can be applied to an unlicensed spectrum, where the unlicensed spectrum can also be considered as a shared spectrum; or, the communication system in the embodiments of the present disclosure can be applied to an authorized spectrum, where the authorized spectrum can also be considered as an unshared spectrum.

Various embodiments of the present disclosure are described in conjunction with a network device and a terminal device. The terminal device may also be referred to as a user equipment (UE), an access terminal, a user unit, a user station, a mobile station, a remote station, a remote terminal, a mobile device, a user terminal, a terminal, a wireless communication device, a user agent or user device, etc.

The terminal device may be a station (ST) in a WLAN, a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, a vehicle-mounted device, a wearable device, a terminal device in a next-generation communication system such as a NR network, or a terminal device in a future evolved public land mobile network (PLMN), etc.

In the embodiments of the present disclosure, the terminal device can be deployed on land, including indoors or outdoors, handheld, wearable or vehicle-mounted; can also be deployed on water (such as ships, etc.); can also be deployed in the air (for example, on airplanes, balloons, and satellites, etc.).

In the embodiments of the present disclosure, the terminal device may be a mobile phone, a pad, a computer with wireless transceiving functions, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

By way of explanation rather than limitation, in the embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In the embodiments of the present disclosure, the network device may be a device for communicating with a mobile device. The network device may be an AP in WLAN, a base station (BTS) in GSM or CDMA, a NodeB (NB) in WCDMA, an evolutional Node B (eNB or eNodeB), a relay station, an access point, a vehicle-mounted device, or a wearable device in LTE, a network device in NR (the next generation Node B, gNB), a network device in a future evolved PLMN, a network device in an NTN, etc.

As an example but not limitation, in the embodiments of the present disclosure, the network device may be mobile, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station set up in a location such as land or water.

In the embodiments of the present disclosure, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cells here may include: a metro cell, a micro cell, a pico cell, a femto cell, etc. These small cells have the characteristics of small coverage and low transmission power, and are suitable for providing high-speed data transmission services.

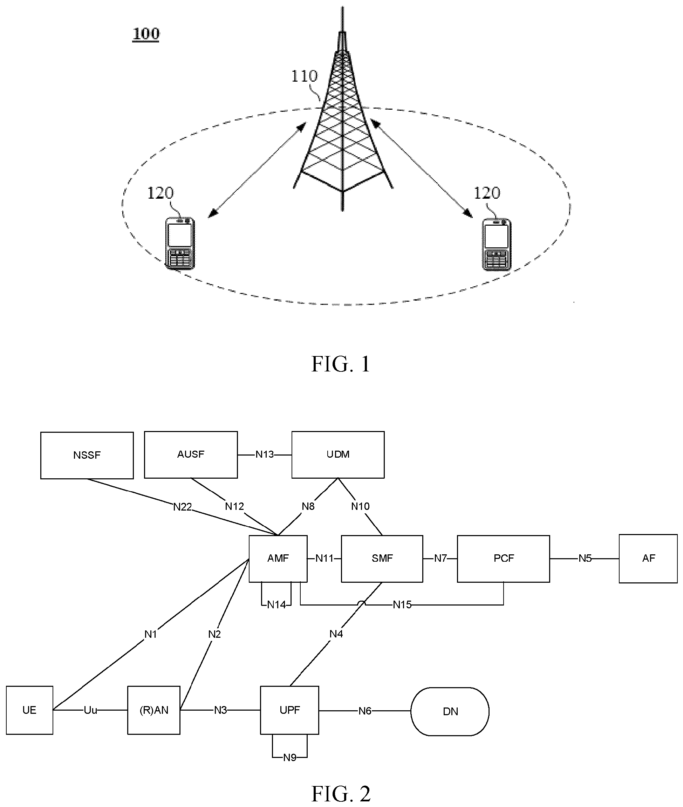

FIG. 1 exemplarily illustrates a communication system 100. The communication system includes a network device 110 and two terminal devices 120. In an embodiment, the communication system 100 may include multiple network devices 110, and other number of terminal devices 120 may be included within the coverage area of each network device 110, which is not limited in the embodiments of the present disclosure.

In an embodiment, the communication system 100 may further include other network entities such as a mobility management entity (MME), an access and mobility management function (AMF), etc., which is not limited in the embodiments of the present disclosure.

The network devices may include an access network device and a core network device. That is, the wireless communication system further includes multiple core networks for communicating with the access network device. The access network device may be an evolutional node B (eNB or e-NodeB for short), a macro base station, a micro base station (also called "small base station"), a pico base station, an AP, a transmission point (TP) or a new generation Node B (gNodeB) in an LTE system, an NR system or an authorized auxiliary access long-term evolution (LAA-LTE) system.

It may be understood that, the device with communication functions in the network/system in the embodiments of the present disclosure can be called a communication device. Taking the communication system illustrated in FIG. 1 as an example, the communication device may include a network device and a terminal device with communication functions, and the network device and the terminal device may be specific devices in the embodiments of the present disclosure, which will not be repeated here. The communication devices may also include other devices in the communication system, such as a network controller, an MME, and other network entities, which is not limited in the embodiments of the present disclosure.

It may be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, "indication" referred to in the embodiments of the present disclosure may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, *A* indicates *C*, and *B* can be obtained according to *C*; or may mean that that there is an association relationship between *A* and *B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

To facilitate understanding of the technical solutions of the embodiments of the present disclosure, the relevant technologies of the embodiments of the present disclosure are described below. The following related art as an optional scheme can be arbitrarily combined with the technical solutions of the embodiments of the present disclosure, which are all belong to the protection scope of the embodiments of the present disclosure.

FIG. 2 illustrates an exemplary 5G system architecture. The UE establishes an access stratum connection with an access network (AN) through a Uu interface, to exchange access stratum messages and perform wireless data transmission. The UE establishes a non- access stratum (NAS) connection with an AMF through N1 interface, to exchange NAS messages. The AMF is an access and mobility management function in a core network. A session management function (SMF) is a session management function in the core network. In addition to mobility management of the UE, the AMF is further responsible for forwarding session management-related messages between the UE and the SMF. A policy control function (PCF) is a policy control function in the core network and is responsible for specifying policies related to mobility management, session management, charging, etc. of the UE. A user plane function (UPF) is a user plane function in the core network. The UPF performs data transmission with an external network through N6 interface. The UPF is further used for data transmission with the AN through N3 interface.

Current cellular networks, including 5G networks, are only used for communication. However, radio electromagnetic wave signals used by cellular networks can not only be used for wireless data transmission and communication, but also have environmental sensing capabilities, such as recognition of motions or gestures of users, breathing monitoring, measurement of movement speed of terminals, environmental imaging, weather monitoring, etc. Therefore, future cellular networks can be considered not only for communication and data transmission, but also for acquisition of sensing information.

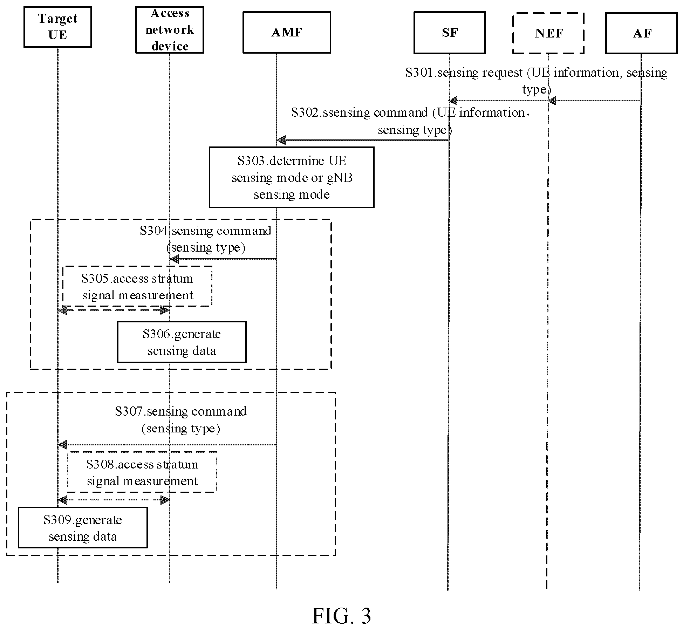

At present, supporting sensing capabilities in beyond 5G (B5G) network is being discussed. Sensing functionalities may be supported in the 3rd generation partnership project (3GPP) network by adding a sensing function (SF) and corresponding processes. FIG. 3 is a flow chart illustrating that an access network device or UE may be controlled to perform per-UE sensing. An application function (AF) may send a sensing request for a target UE to a core network of the 3GPP network. The core network may select a suitable access network device or target UE through an SF or AMF, trigger the capability of sensing-related wireless measurements, start measurement of sensing information, and generate a sensing result. The target UE may also be a secondary UE.

The main wireless sensing modes in integrated sensing and communication (ISAC) are as follows.
1. gNB echo sensing (single gNB self-transmitting and self-receiving sensing): The gNB transmits a sensing signal and receives an echo signal.
2. gNB-gNB sensing: gNB B receives a sensing signal transmitted by gNB A.
3. Air interface uplink (UL) sensing (UE-gNB UL sensing): The gNB receives a sensing signal transmitted by the UE.
4. Air interface downlink (DL) sensing (UE-gNB DL sensing): The UE receives a sensing signal transmitted by the gNB.
5. UE echo sensing (single UE self-transmitting and self-receiving sensing): The UE sends a sensing signal and receives an echo signal.
6. UE-UE sensing: UE B receives a sensing signal transmitted by UE A.

In the early stage of B5G ISAC, consideration is given to multiplexing relevant air interface signals as much as possible to perform sensing behaviors without introducing too much air interface enhancement; and considering the complexity of full-duplex implementation, sensing between UEs and/or gNBs is a priority.

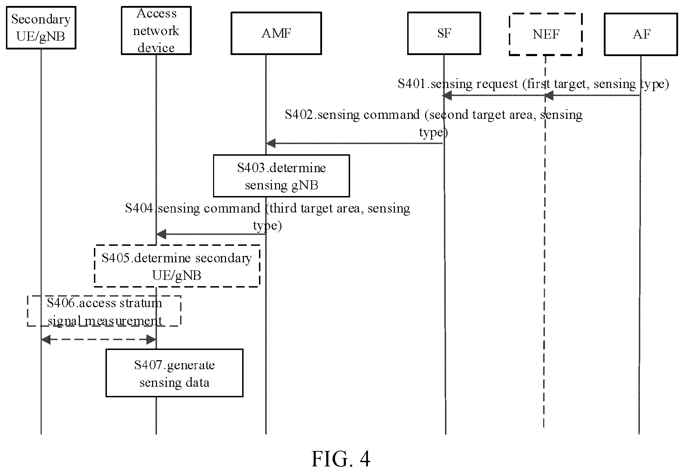

FIG. 3 illustrates a process of per-UE sensing. FIG. 4 illustrates a process of a per-area sensing.

As illustrated in FIG. 3, the sensing process may specifically include the following. Step 301, an AF sends a sensing request for a target UE (which may contain UE information, a sensing type, etc.) to a core network of the 3GPP network. Step 302, an SF sends a sensing command (which may contain UE information, a sensing type, etc.) to an AMF. Step 303, the AMF determines a UE sensing mode or a gNB sensing mode.

Optionally, in step 304, the AMF sends a sensing command (which may contain a sensing type, etc.) to an access network device. In step 305, the access network device performs access stratum signal measurement with the target UE. In step 306, the access network device generates sensing data.

Optionally, in step 307, the AMF sends a sensing command (which may contain a sensing type, etc.) to the target UE. In step 308, the access network device performs access stratum signal measurement with the target UE. In step 309, the target UE generates sensing data.

As illustrated in FIG. 4, the sensing process may specifically include the following. Step 401, an AF sends a sensing request (which may contain a first target area, a sensing type, etc.) to a core network. Step 402, an SF of the core network sends a sensing command (which may contain a second target area, a sensing type, etc.) to an AMF. Step 403, the AMF determines a sensing gNB. Step 404, the AMF sends a sensing command (which may contain a third target area, a sensing type, etc.) to an access network device. Step 405, the access network device determines a secondary UE or a secondary gNB. Step 406, the access network device performs access stratum signal measurement with the secondary UE or gNB. Step 407, the access network device generates sensing data.

The main difference between the sensing processes of FIGs. 3 and 4 is that the process of per-UE sensing includes that a specific UE serves as a sensing target, which belongs to "active sensing", while for the process of per-area sensing, a sensing target is a specific area or object, which does not belong to 3GPP, and no specific UE is included, and thus the process of per-area sensing belongs to "passive sensing".

### Configuration of relevant positioning reference signals (RSs)

The positioning architecture is mainly composed of a UE, multiple gNBs, an AMF, and a location management function (LMF). In the first step, the UE and/or gNB send a sounding reference signal (SRS) and/or a positioning reference signal (PRS) according to known configuration patterns. After that, the gNB and/or UE measure the SRS and/or PRS according to known configuration patterns to obtain positioning-related measurements such as an angle of departure, an angle of arrival, a distance, a distance difference, and the like. Finally, these measurements are summarized to the UE or LMF to perform positioning and obtain the final positioning result.

The following is a positioning method based on multi-round trip time (multi-RTT) to illustrate configuration and measurement of an SRS and a PRS.

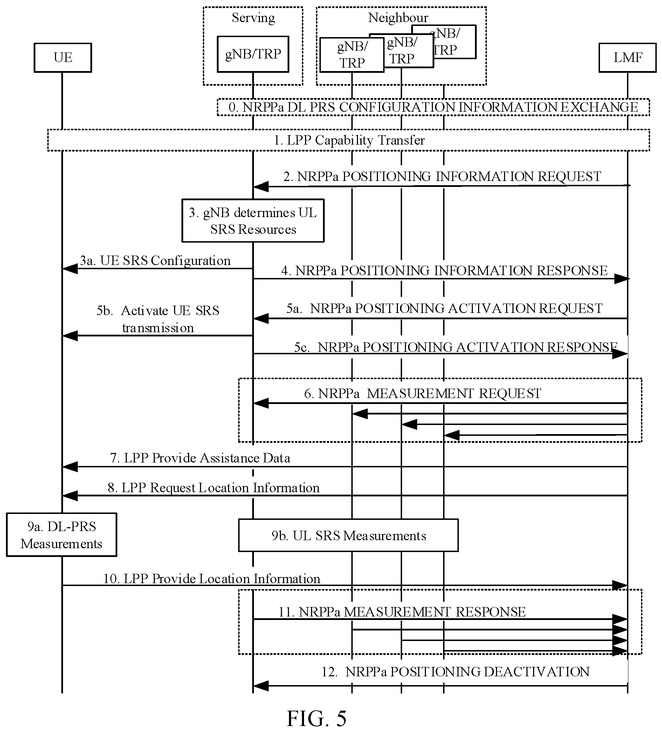

As illustrated in FIG. 5, in step 3a, a gNB configures an UL SRS resource for a UE, and then in step 5a, the network activates the UE to transmit an SRS. In step 6, the LMF informs each neighboring gNB of SRS resource configuration of the UE via a new radio positioning protocol A (NRPPa) measurement request, and requires each gNB to measure the SRS sent by the UE. In addition, in step 9b, the network performs UL SRS measurement. In step 11, each gNB reports collected measurements to the LMF. In addition, for DL measurement, in steps 7 and 8, the network first sends unique DL PRS configuration information of each gNB to the UE, and then activates the UE to perform DL measurement, such as DL PRS measurement in step 9a. Then in step 10, the UE sends measurements to the LMF via an LTE positioning protocol (LPP) ProvideLocationInformation message.

### Related UE positioning measurements reporting process

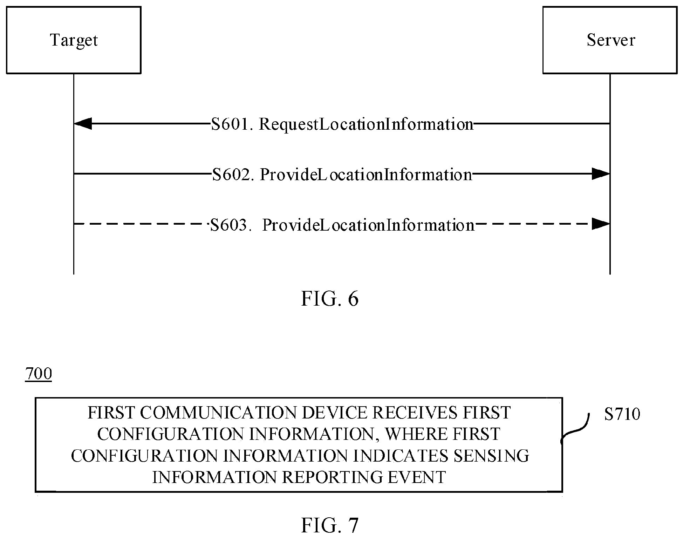

As illustrated in FIG. 6, in step 601, a RequestLocationInformation message body in an LPP message is used by an LMF of a location server to request positioning measurements or a position estimate from a target device. RequestLocationInformation indicates a positioning method and reporting method selected by a positioning system.

For example, the LPP RequestLocationInformation information element (IE) contains commonIEsRequestLocationInformation. This field specifies the location information type requested by the location server and optionally other configuration information associated with the requested location information.

That is, the commonIEsRequestLocationInformation IE in the LPP RequestLocationInformation specifies configuration associated with result reporting.

If the system decides to apply a certain positioning method, the system will further include an IE corresponding to the specific method, such as nr-Multi-RTT-RequestLocationInformation-r16.

For example, CommonIEsRequestLocationInformation carries common IEs for a request location information LPP message type. Some fields of CommonIEsRequestLocationInformation are as follows:

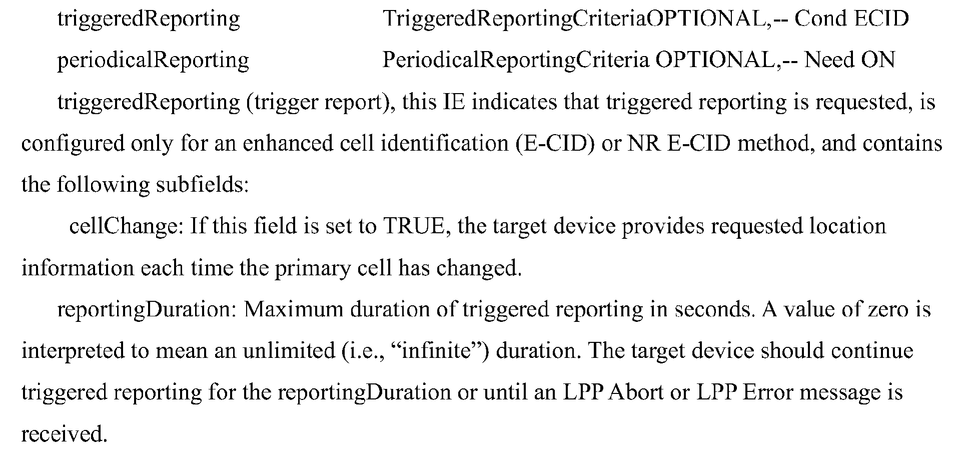

PeriodicalReporting: This IE indicates that periodic reporting is requested and contains the following subfields:
reportingAmount indicates the number of periodic location information reports requested. Enumerated values correspond to 1, 2, 4, 8, 16, 32, 64, or infinite/indefinite number of reports. If the *reportingAmount* is *'infinite*/*indefinite',* the target device should continue periodic reporting until an LPP *Abort* message is received. The value *'ral'* shall not be used by a sender.
reportingInterval indicates the interval between location information reports and the response time requirement for the first location information report. Enumerated values ri0-25, ri0-5, ri1, ri2, ri4, ri8, ri16, ri32, ri64 correspond to reporting intervals of 1, 2, 4, 8, 10, 16, 20, 32, and 64 seconds, respectively. Measurement reports containing no measurements or no location estimate are required when a *reportingInterval* expires before a target device is able to obtain new measurements or obtain a new location estimate. The value *'noPeriodicalReporting'* shall not be used by a sender.

Based on the above introduction of fields, it can be known that configuring periodic reporting by containing a periodicreporting field is supported. In particular, for the E-CID method, configuring event-triggered reporting by containing a triggeredreporting field is supported. Within the maximum duration of triggered reporting, when the primary cell changes, the UE reports requested location information to the network.

In the relevant positioning measurements reporting process, the main reporting method supported is periodic reporting, and event-triggered reporting is only supported in the E-CID method. Positioning measurements can be reported via the PrivideLocationInformation message (see steps S602 and S603).

As for sensing, on the one hand, sensing measurements may have a larger amount of data than positioning measurements; on the other hand, for some sensing scenarios (such as an intrusion detection scenario), although the network may be configured with sensing nodes to periodically measure a sensing RS, in most cases, sensing measurements are stable and vary slightly. Therefore, if a large number of redundant sensing measurements that vary slightly are periodically transmitted, unnecessary overhead of data and/or signaling for transmission may be generated.

FIG. 7 is a schematic flow chart of a method 700 for reporting sensing information according to an embodiment of the present disclosure. The method may optionally be applied to the system as illustrated in FIG. 1, but is not limited thereto. The method includes at least part of the following contents.

S710, a first communication device receives first configuration information, where the first configuration information indicates a sensing information reporting event.

In the embodiments of the present disclosure, the first communication device may be a terminal device. The first communication device may receive the first configuration information from a second communication device such as a network device or other terminal devices. The first configuration information may indicate the sensing information reporting event for the first communication device. After receiving the first configuration information, the first communication device may determine whether sensing information satisfies the sensing information reporting event, and then determine information to be reported. Compared with periodic reporting, the first communication device performing reporting based on the sensing information reporting event can reduce redundancy, and thus reducing unnecessary overhead of data and/or signaling for transmission.

In the embodiments of the present disclosure, the sensing information reporting event may be understood as a sensing information reporting criterion. Satisfying the sensing information reporting event may be understood as satisfying the sensing information reporting criterion, or may be understood as the occurrence or emergence of the sensing information reporting event.

In an embodiment, the first configuration information includes at least one of:
a sensing information threshold;
a sensing information variation threshold;
a triggered sensing information reporting timer; or
a triggered sensing information reporting counter.

In the embodiments of the present disclosure, sensing information may also be referred to as sensing measurements. The first communication device may obtain sensing measurements by measuring a sensing RS.

In the embodiments of the present disclosure, the sensing information reporting event indicated by the first configuration information may include that sensing information satisfies the sensing information threshold, a variation of the sensing information satisfies the sensing information variation threshold, the timer satisfies a certain value, the counter satisfies a certain value, etc. There may be a corresponding relationship among sensing RSs, sensing information, and sensing information reporting events. The first communication device determines whether sensing information obtained by measuring a sensing RS satisfies a corresponding sensing information reporting event based on the sensing RS and a corresponding relationship between sensing RSs and sensing information reporting events, and then determines how to perform subsequent reporting.

In the embodiments of the present disclosure, the sensing information reporting event for the first communication device can be determined based on a combination of one or more of the threshold(s), the timer, and the counter included in the first configuration information. For example, a sensing information reporting event may be determined based on the triggered sensing information reporting timer and the triggered sensing information reporting counter. For another example, a sensing information reporting event may be determined based on the sensing information variation threshold and the triggered sensing information reporting timer.

In an embodiment, the sensing information reporting event corresponding to the first configuration information includes at least one of:
a signal strength obtained by measuring a sensing RS is less than a configured signal strength threshold;
the signal strength obtained by measuring the sensing RS is greater than or equal to the configured signal strength threshold;
a signal strength variation obtained by measuring the sensing RS is less than a configured signal strength variation threshold;
the signal strength variation obtained by measuring the sensing RS is greater than or equal to the configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

The above illustrates examples of sensing information reporting events, not an exhaustive list, and in actual application scenarios, there may be more types of sensing information reporting events based on a sensing RS that needs to be measured and sensing information that needs to be requested. The first communication device may report sensing information obtained by measuring a sensing RS associated with a sensing information reporting event when the sensing information reporting event is satisfied, or may report sensing information obtained by measuring a sensing RS(s) associated with multiple types of sensing information reporting events when the multiple types of sensing information reporting events are satisfied.

In an embodiment, the first configuration information is in a first message, and the first message is sent via radio resource control (RRC) signaling and/or NAS signaling.

In an embodiment, the first message is a RequestSensingInformation message. The first message may be multiplexed with the RequestSensingInformation message, or may be a message with another name. The first message may be set according to specific requirements. For example, the first configuration information may be a triggeredReporting IE in the first message.

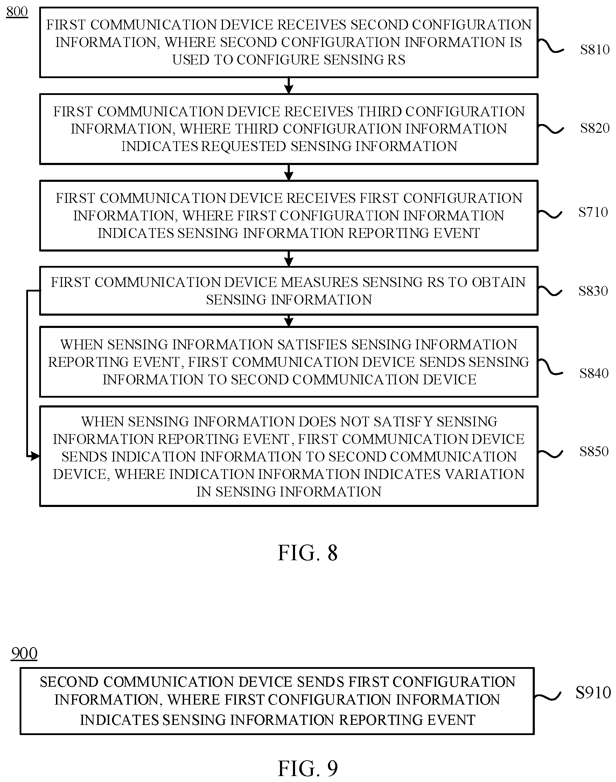

In an embodiment, as illustrated in FIG. 8, based on the above method 700, a method 800 further includes the following. S810, the first communication device receives second configuration information, and the second configuration information is used to configure a sensing RS. There are many types of sensing RSs, such as a channel state information reference signal (CSI-RS), a PRS, an SRS, or an RS dedicated for sensing. The second configuration information includes configuration information of time-frequency domain resources of an RS, such as a subcarrier spacing, a length of a cyclic prefix, a resource bandwidth in frequency domain, a starting frequency position in frequency domain, a reference point in frequency domain, a comb size, a transmission period and a slot offset, a repetition factor, etc. After receiving the second configuration information, the first communication device can determine the sensing RS that needs to be measured. For example, if the second configuration information includes configuration information of the PRS, the sensing RS that needs to be measured by the first communication device is a PRS resource.

In an embodiment, the second configuration information is in a second message, and the first message is sent via RRC signaling and/or NAS signaling.

In an embodiment, the second message is a ProvideAssitancedata message. The second message may be multiplexed with the ProvideAssitancedata message, or may be a message with another name, which can be set according to specific requirements.

In an embodiment, the second configuration information carries information of a second communication device that sends the sensing RS.

In an embodiment, the second communication device includes at least one of:
a network device;
a terminal device that sends the first message; or
a terminal device that receives the first message.

In the embodiments of the present disclosure, a device that sends a sensing RS may be a network device or a terminal device. For example, the second configuration information received by terminal device A carries information of a sensing RS and information of a network device that sends the sensing RS. For another example, the second configuration information received by terminal device A carries information of a sensing RS and information of terminal device A that sends the sensing RS. For another example, the second configuration information received by terminal device A carries information of a sensing RS and information of terminal device B that sends the sensing RS.

In an embodiment, the method 800 further includes the following. S820, the first communication device receives third configuration information, and the third configuration information indicates requested sensing information. There are many types of sensing information or sensing measurements, such as reference signal received power (RSRP), a delay, a Doppler shift, channel information, whether a sensing target exists, etc. After the first communication device receives the third configuration information, the first communication device can determine the type of sensing information of a sensing RS that needs to be measured. For example, in the case where the third configuration information includes RSRP, the first communication device needs to measure RSRP of a PRS resource.

In an embodiment, the third configuration information indicates at least one of the following sensing information requested by the second communication device:
original channel information;
basic measurements;
an attribute of a sensing target; or
a status of the sensing target.

For example, the original channel information may also be referred to as received signal information, which may include a complex result, an amplitude, a phase, a I path, a Q path and related operation results of received signal or channel response.

Basic modulation schemes include amplitude, frequency, and phase modulations. A modulated signal may be represented using polar coordinates of amplitude and phase (vector). I/Q modulation is widely used in digital communications due to its high spectral efficiency. I/Q modulation uses two carriers, one is an in-phase (I) component and the other is a quadrature (Q) component, with a 90° phase shift between the two components. Therefore, the I path represents the in-phase component, and the Q path represents the quadrature component.

For another example, the basic measurements may include one or more of a delay, a Doppler shift, an angle, a signal strength, etc.

For example, the attribute or status of a sensing target may include a distance, a speed, an orientation, an acceleration, whether the target exists, a spatial position, a trajectory, a motion, an expression, etc.

In an embodiment, the third configuration information is in a third message, and the third message is sent via RRC signaling and/or NAS signaling.

In an embodiment, the third message is a RequestSensingInformation message. The third message may be multiplexed with the RequestSensingInformation message, or may be a message with another name. The third message may be set according to specific requirements.

In an embodiment, the method 800 further includes the following. S830, the first communication device measures the sensing RS to obtain the sensing information.

In an embodiment, the method 800 further includes the following. S840, when the sensing information satisfies the sensing information reporting event, the first communication device sends the sensing information to the second communication device.

In an embodiment, the sensing information is in a ProvideSensingInformation message. The first communication device can report, by sending the ProvideSensingInformation message to the second communication device, the sensing information obtained by measuring the sensing RS.

In an embodiment, the method 800 further includes the following. S850, when the sensing information does not satisfy the sensing information reporting event, the first communication device sends indication information to the second communication device, where the indication information indicates a variation in the sensing information.

In an embodiment, the indication information is in the ProvideSensingInformation message. The first communication device can report, by sending the ProvideSensingInformation message to the second communication device, the variation in the sensing information obtained by measuring the sensing RS.

For example, the first communication device determines whether the sensing information obtained by measuring the sensing RS satisfies the corresponding sensing information reporting event. In the case where the sensing information obtained by measuring the sensing RS satisfies the corresponding sensing information reporting event, the first communication device may report the sensing information obtained by measurement to the device that requests the sensing information. In the case where the sensing information obtained by measuring the sensing RS does not satisfy the corresponding sensing information reporting event, the first communication device may not report the sensing information obtained by measurement, or may report part of the sensing information obtained by measurement, or may only report indication information indicative of that the sensing information varies slightly.

In the embodiments of the present disclosure, the first configuration information, the second configuration information, and the third configuration information may be transmitted via the same message or via different messages, or any two of the first configuration information, the second configuration information, and the third configuration information may be transmitted via the same message. Therefore, the steps of receiving the first configuration information, the second configuration information, and the third configuration information can be combined or split according to different transmission messages. In addition, in the embodiments of the present disclosure, there is no restriction on the timing of the steps of receiving the first configuration information, the second configuration information, and the third configuration information.

In the embodiments of the present disclosure, after receiving the first configuration information, the second configuration information, and the third configuration information, the first communication device can measure the sensing RS indicated by the second configuration information to obtain the sensing information requested by the second communication device indicated by the third configuration information. Then, based on the first configuration information, the first communication device determines whether the sensing information obtained by measurement satisfies the sensing information reporting event. In the case where the sensing information obtained by measurement satisfies the sensing information reporting event, the sensing information is reported. In the case where the sensing information obtained by measurement does not satisfy the sensing information reporting event, the indication information may be reported to indicate that the sensing information varies slightly.

In the embodiments of the present disclosure, using the sensing information reporting event helps to more reasonably report sensing information, thereby reducing unnecessary overhead for reporting.

FIG. 9 is a schematic flow chart of a method 900 for reporting sensing information according to another embodiment of the present disclosure. The method may optionally be applied to the system as illustrated in FIG. 1, but is not limited thereto. The method includes at least part of the following contents.

S 910, a second communication device sends first configuration information, where the first configuration information indicates a sensing information reporting event.

In an embodiment, the first configuration information includes at least one of:
a sensing information threshold;
a sensing information variation threshold;
a triggered sensing information reporting timer; or
a triggered sensing information reporting counter.

In an embodiment, the sensing information reporting event corresponding to the first configuration information includes at least one of:
a signal strength obtained by measuring a sensing RS is less than a configured signal strength threshold;
the signal strength obtained by measuring the sensing RS is greater than or equal to the configured signal strength threshold;
a signal strength variation obtained by measuring the sensing RS is less than a configured signal strength variation threshold;
the signal strength variation obtained by measuring the sensing RS is greater than or equal to the configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

In an embodiment, the first configuration information is in a first message, and the first message is sent via RRC signaling and/or NAS signaling.

In an embodiment, the first message is a RequestSensingInformation message.

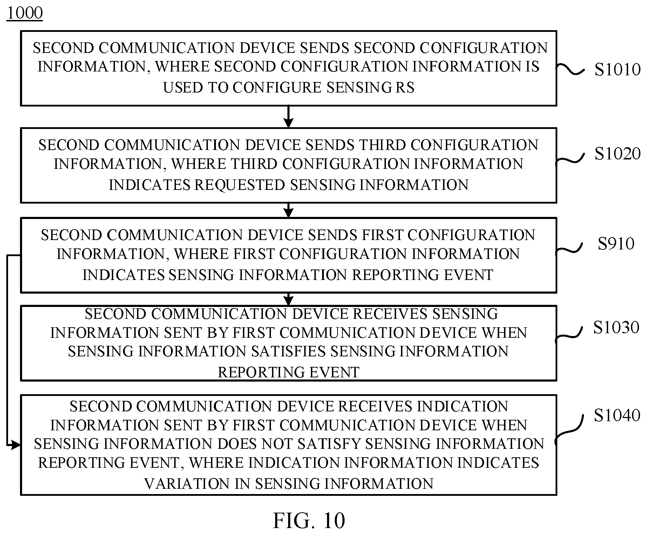

In an embodiment, as illustrated in FIG. 10, based on the above method 900, the method 1000 further includes the following. S1010, the second communication device sends second configuration information, where the second configuration information is used to configure a sensing RS.

In an embodiment, the second configuration information is in a second message, and the second message is sent via RRC signaling and/or NAS signaling.

In an embodiment, the second message is a ProvideAssistanceData message.

In an embodiment, the second configuration information carries information of the second communication device that sends the sensing RS.

In an embodiment, the second communication device includes at least one of:
a network device;
a terminal device that sends the first message; or
a terminal device that receives the first message.

In an embodiment, the method 1000 further includes the following. S1020, the second communication device sends third configuration information, where the third configuration information indicates requested sensing information.

In an embodiment, the third configuration information indicates at least one of the following sensing information requested by the second communication device:
original channel information;
basic measurements;
an attribute of a sensing target; or
a status of the sensing target.

In an embodiment, the third configuration information is in a third message, and the third message is sent via RRC signaling and/or NAS signaling.

In an embodiment, the third message is a RequestSensingInformation message.

In an embodiment, the method 1000 further includes the following. S1030, the second communication device receives sensing information sent by the first communication device when the sensing information satisfies the sensing information reporting event.

In an embodiment, the sensing information is in a ProvideSensingInformation message.

In an embodiment, the method 1000 further includes the following. S1040, the second communication device receives indication information sent by the first communication device when the sensing information does not satisfy the sensing information reporting event, where the indication information indicates a variation in the sensing information.

In an embodiment, the indication information is in the ProvideSensingInformation message.

For a specific example of that the second communication device executes the method 800 in the embodiments, reference may be made to related illustration of the network device, such as a base station, or a receiving terminal device in the above method 700, which will not be repeated here for the sake of brevity.

### Example 1: Interaction between a UE and a network device:

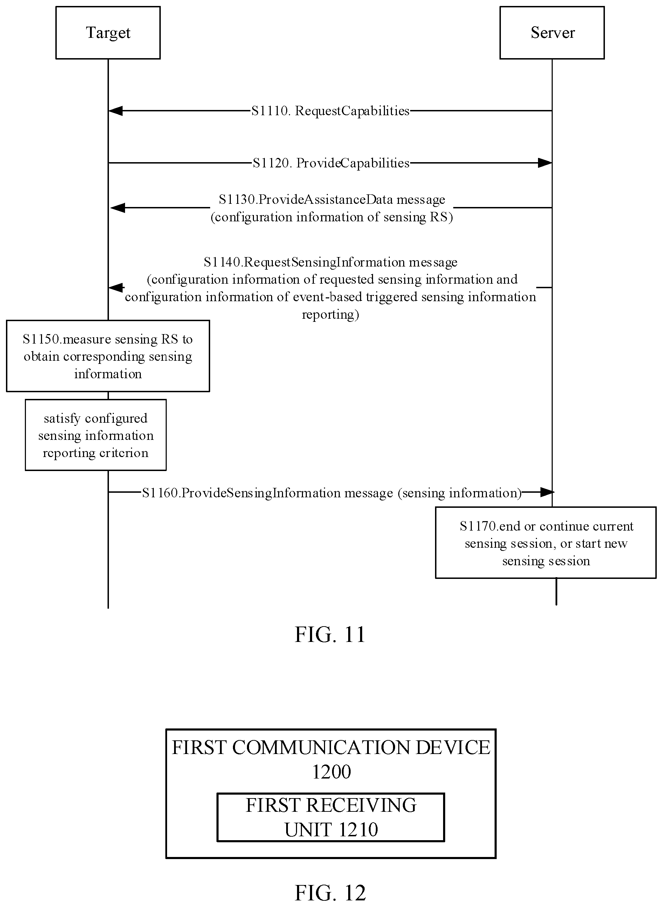

In a case where the network device (e.g., gNB, LMF, AMF, or service function (SF)) initiates a sensing session between the UE and the network device (gNB, LMF, AMF, or SF) based on a sensing request (e.g., MT-SR, MO-SR, or NI-SR), the following steps are included, as illustrated in FIG. 11.

S1110 and S1120, the UE and the network device (gNB, LMF, AMF, or SF) exchange sensing capabilities. A server, such as the network device, sends a RequestCapabilities message to a target device, such as the UE. The target device returns a ProvideCapabilities message to the server.

S1130, the UE receives a ProvideAssistanceData message sent by the network device (gNB, LMF, AMF or SF), where the message carries configuration information of a sensing RS (i.e., an example of the second configuration information). The message may be sent via RRC and/or NAS dedicated signaling.

The above-mentioned sensing RS may be sent by the gNB (UE-gNB DL sensing), or by other UEs participating in sensing (UE-UE sensing), or by the current UE itself (UE self-transmitting and self-receiving sensing). Therefore, the message may also carry gNB and/or UE ID information related to a sending node that sends the sensing RS.

S1140, the UE receives a RequestSensingInformation message sent by the network device (gNB, LMF, AMF or SF), where the message contains configuration information indicating requested sensing information (i.e., an example of the third configuration information) and configuration information for event-triggered sensing information reporting (such as triggeredReporting IE) (i.e., an example of the first configuration information). The message can be sent via RRC and/or NAS dedicated signaling.
a. The configuration information indicating requested sensing information mainly indicates that the network device (gNB, LMF, AMF or SF) requires sensing information of different levels. For specific examples, see Table 1.

**Table 1**

| | Sensing information of different levels | Contents of sensing information |
|---|---|---|
| 1 | Received signal or original channel information | Complex result, amplitude/phase, I/Q path and related operation results of received signal or channel response |
| 2 | Basic measurements | Delay, Doppler shift, angle, signal strength, and multidimensional combination representation thereof |
| 3 | Basis attribute or status of sensing target | Distance, speed, orientation, acceleration, etc. |
| 4 | Advanced attribute or status of sensing target | Whether target exists, spatial location, trajectory, motion, expression, vital signs, quantity, imaging results, weather, air quality, shape, material, composition, etc. |

b. Configuration information for event-triggered sensing information reporting (triggeredReporting IE) may include at least one of a sensing information threshold, a sensing information variation threshold, a sensing information reporting timer, or a triggered sensing information reporting counter.

In the case where the sensing information required by the network device (gNB, LMF, AMF or SF) is a combination of different sensing information, multiple different thresholds may be configured for different sensing information, and the reporting criterion (or reporting event) may be that one of these sensing information satisfies the condition, or all of these sensing information satisfies the condition.

Example 1: The network configures that the UE reports a signal strength, and the network indicates a corresponding signal strength threshold. When RSRP of a sensing RS measured by the UE is greater than/less than a RSRP threshold, measurements reporting is triggered.

Example 2: For the intrusion detection scenario (sensing target detection), the network configures a reporting delay, a Doppler shift, or original channel information reflecting channel response, and indicates a corresponding variation threshold. In the case where a variation in the delay, Doppler shift, or original channel information reflecting channel response obtained by the UE measuring a sensing RS is greater than the configured variation threshold, measurements reporting is triggered.

Example 3: For the intrusion detection scenario (sensing target detection), the network configures reporting whether the target exists, and configures the sensing information reporting timer and the triggered sensing information reporting counter:
(1) the triggered sensing information reporting counter is initially set to 0.
(2) If the UE receives indication information from the lower layer, and the indication information indicates that the presence of the sensing target is detected:
   (2-1) The UE starts or restarts the sensing information reporting timer.
   (2-2) The triggered sensing information reporting counter is increased by 1.
   (2-3) If a value of the triggered sensing information reporting counter is greater than or equal to the maximum value set by the network:
      (2-3-1) sensing information reporting is triggered, and the UE reports that the presence of the sensing target is detected.
      (2-3-2) The triggered sensing information reporting counter is set to 0.
(3) If the sensing information reporting timer times out, the triggered sensing information reporting counter is set to 0.

Example 4: The network configures reporting a sensing information range-Doppler Matrix, i.e., a matrix in which the horizontal axis represents delay/distance, the vertical axis represents Doppler shift/speed, and the values represents signal strengths; and configures a signal strength variation threshold for triggered reporting. Then, a criterion for triggered reporting is:
(1) If the UE has not reported sensing information in the case where the UE is configured with sensing measurement and reporting; or
(2) If a variation in any element in a range-Doppler matrix obtained by the UE measuring a sensing RS is greater than or equal to the signal strength variation threshold, the UE triggers sensing information range-Doppler matrix reporting.

S1150, the UE measures the sensing RS according to the above configuration to obtain corresponding sensing information.

S1160, in the case where the sensing information obtained by the UE satisfies the configured sensing information reporting criteria, the UE sends a ProvideSensingInformation message to the network device (gNB, LMF, SF or AMF), where the ProvideSensingInformation message carries the corresponding sensing information.

Optionally, if the sensing information reporting criteria is not satisfied, the complete sensing information may not be reported, but only indication information may be reported to indicate that the sensing information varies slightly.

S1170, the network device (gNB, LMF, SF or AMF) obtains a sensing result based on the sensing information reported by the UE, and selects to end or continue the current sensing session, or start a new sensing session.

### Example 2: Interaction between UEs

For the out of coverage (OOC) scenario, the UE cannot access the network, so the sensing operation cannot be performed under the control of the network device (gNB, LMF, AMF or SF). In the OOC scenario, the network/network device (gNB, LMF, AMF or SF) in Example 1 can be changed to a sensing server UE (a terminal with sensing server functions).

After the sensing server UE initiates a sensing session between the UE and the sensing server UE based on a sensing request, the specific implementation process is similar to Example 1.

In the embodiments of the present disclosure, the UE triggers sensing information reporting according to the configured sensing information reporting event. For example, the UE measures a sensing RS to obtain requested sensing information according to configuration information of the sensing RS sent by the network device (gNB, LMF, AMF or SF) or the sensing server UE, configuration information indicating requested sensing information, and configuration information for event-triggered sensing information reporting, and decides whether to trigger sensing information reporting. In the scheme of the embodiments of the present disclosure, unnecessary overhead for reporting can be reduced by introducing the event-triggered sensing information reporting.

FIG. 12 is a schematic block diagram of a first communication device 1200 according to an embodiment of the present disclosure. The first communication device 1200 includes a first receiving unit 1210 configured to receive first configuration information, where the first configuration information indicates a sensing information reporting event.

In an embodiment, the first configuration information includes at least one of:
a sensing information threshold;
a sensing information variation threshold;
a triggered sensing information reporting timer; or
a triggered sensing information reporting counter.

In an embodiment, the sensing information reporting event corresponding to the first configuration information includes at least one of:
a signal strength obtained by measuring a sensing RS is less than, greater than, or equal to a configured signal strength threshold;
a signal strength variation obtained by measuring the sensing RS is less than, greater than, or equal to a configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

In an embodiment, the first configuration information is in a first message, and the first message is sent via RRC signaling and/or NAS signaling.

In an embodiment, the first message is a RequestSensingInformation message.

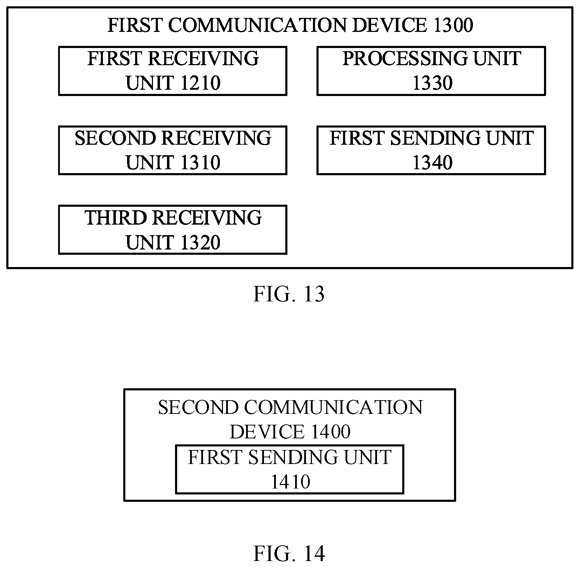

In an embodiment, as illustrated in FIG. 13, the first communication device 1300 further includes a second receiving unit 1310 configured to receive second configuration information, where the second configuration information is used to configure a sensing RS.

In an embodiment, the second configuration information is in a second message, and the second message is sent via RRC signaling and /or NAS signaling.

In an embodiment, the second message is a ProvideAssistanceData message.

In an embodiment, the second configuration information carries information of a second communication device that sends the sensing RS.

In an embodiment, the second communication device includes at least one of:
a network device;
a terminal device that sends the first message; or
a terminal device that receives the first message.

In an embodiment, as illustrated in FIG. 13, the first communication device further includes a third receiving unit 1320 configured to receive third configuration information, where the third configuration information indicates requested sensing information.

In an embodiment, the third configuration information indicates at least one of the following sensing information requested by the second communication device:
original channel information;
basic measurements;
an attribute of a sensing target; or
a status of the sensing target.

In an embodiment, the third configuration information is in a third message, and the third message is sent via RRC signaling and /or NAS signaling.

In an embodiment, the third message is a RequestSensingInformation message.

In an embodiment, as illustrated in FIG. 13, the first communication device further includes a processing unit 1330 configured to measure the sensing RS to obtain the sensing information.

In an embodiment, as illustrated in FIG. 13, the first communication device further includes a first sending unit 1340 configured to send the sensing information to the second communication device when the sensing information satisfies the sensing information reporting event.

In an embodiment, the sensing information is in a ProvideSensinginformation message.

In an embodiment, as illustrated in FIG. 13, the first communication device further includes a second sending unit 1350 configured to send indication information to the second communication device when the sensing information does not satisfy the sensing information reporting event, where the indication information indicates a variation in the sensing information.

In an embodiment, the indication information is in a ProvideSensinginformation message.

The first communication devices 1200 and 1300 of the embodiments of the present disclosure can implement corresponding functions of the first communication devices in the embodiments of the methods 700 and 800. For corresponding processes, functions, implementation methods, and beneficial effects of various modules (sub-modules, units, components, etc.) in the first communication devices 1200 and 1300, reference can be made to corresponding illustrations in the above-mentioned method embodiments, which will not be repeated here. It may be noted that, the functions of various modules (sub-modules, units, or components, etc.) in the first communication devices 1200 and 1300 of the embodiments of the present disclosure can be implemented by different modules (sub-modules, units, or components, etc.) or by the same module (sub-module, unit, or component, etc.).

FIG. 14 is a schematic block diagram of a second communication device 1400 according to an embodiment of the present disclosure. The second communication device 1400 includes a first sending unit 1410 configured to send first configuration information, where the first configuration information indicates a sensing information reporting event.

In an embodiment, the first configuration information includes at least one of:
a sensing information threshold;
a sensing information variation threshold;
a triggered sensing information reporting timer; or
a triggered sensing information reporting counter.

In an embodiment, the sensing information reporting event corresponding to the first configuration information includes at least one of:
a signal strength obtained by measuring a sensing RS is less than, greater than, or equal to a configured signal strength threshold;
a signal strength variation obtained by measuring the sensing RS is less than, greater than, or equal to a configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

In an embodiment, the first configuration information is in a first message, and the first message is sent via RRC signaling and/or NAS signaling.

In an embodiment, the first message is a RequestSensingInformation message.

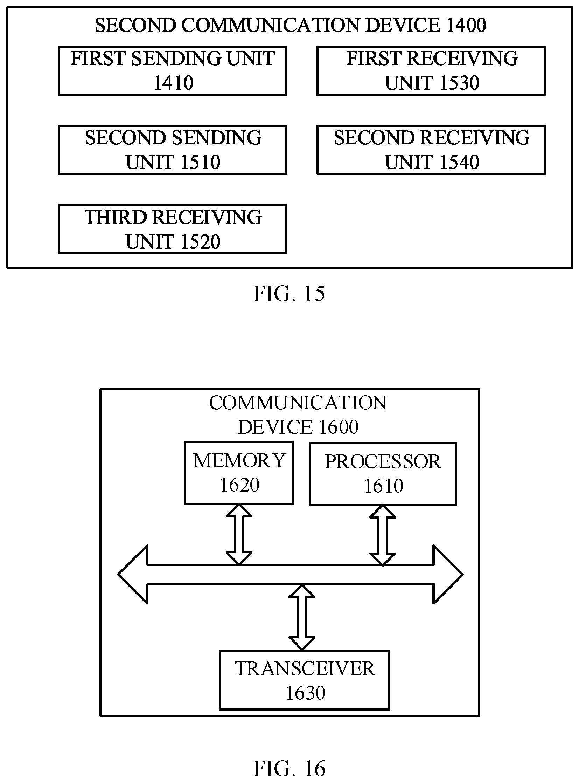

In an embodiment, as illustrated in FIG. 15, the second communication device 1500 further includes a second sending unit 1510 configured to send second configuration information, where the second configuration information is used to configure a sensing RS.

In an embodiment, the second configuration information is in a second message, and the second message is sent via RRC signaling and/or NAS signaling.

In an embodiment, the second message is a ProvideAssistanceData message.

In an embodiment, the second configuration information carries information of a second communication device that sends the sensing RS.

In an embodiment, the second communication device includes at least one of:
a network device;
a terminal device that sends the first message; or
a terminal device that receives the first message.

In an embodiment, as illustrated in FIG. 15, the second communication device further includes a third sending unit 1520 configured to send third configuration information, where the third configuration information indicates requested sensing information.

In an embodiment, the third configuration information indicates at least one of the following sensing information requested by the second communication device:
original channel information;
basic measurements;
an attribute of a sensing target; or
a status of the sensing target.

In an embodiment, the third configuration information is in a third message, and the third message is sent via RRC signaling and/or NAS signaling.

In an embodiment, the third message is a RequestSensingInformation message.

In an embodiment, as illustrated in FIG. 15, the second communication device further includes a first receiving unit 1530 configured to receive sensing information sent by the first communication device when the sensing information satisfies the sensing information reporting event.

In an embodiment, the sensing information is in a ProvideSensingInformation message.

In an embodiment, as illustrated in FIG. 15, the second communication device further includes a second receiving unit 1540 configured to receive indication information sent by the first communication device when the sensing information does not satisfy the sensing information reporting event, where the indication information indicates a variation in the sensing information.

In an embodiment, the indication information is in a ProvideSensinginformation message.

The second communication devices 1400 and 1500 of the embodiments of the present disclosure can implement the corresponding functions of the second communication devices in the embodiments of the aforementioned methods 900 and 1000. For corresponding processes, functions, implementation methods, and beneficial effects of various modules (sub-modules, units, components, etc.) in the second communication devices 1400 and 1500, reference can be made to corresponding illustrations in the above method embodiments, which will not be repeated here. It may be noted that, the functions of various modules (sub-modules, units, components, etc.) in the second communication devices 1400 and 1500 of the embodiments of the present disclosure can be implemented by different modules (sub-modules, units, components, etc.) or by the same module (sub-module, unit, component, etc.).

FIG. 16 is a schematic structural diagram of a communication device 1600 according to embodiments of the present disclosure. The communication device 1600 includes a processor 1610, and the processor 1610 can call and run a computer program from a memory to enable the communication device 1600 to implement the methods in the embodiments of the present disclosure.

In an embodiment, the communication device 1600 may further include a memory 1620. The processor 1610 may call and run a computer program from the memory 1620, to enable the communication device 1600 to implement the methods in the embodiments of the present disclosure.

The memory 1620 may be a separate device independent of the processor 1610, or may be integrated into the processor 1610.

In an embodiment, the communication device 1600 may further include a transceiver 1630, and the processor 1610 can control the transceiver 1630 to communicate with other devices, specifically, can send information or data to other devices, or receive information or data sent by other devices.

The transceiver 1630 may include a transmitter and a receiver. The transceiver 1630 may further include an antenna, and there may be one or more antennas.

In one embodiment, the communication device 1600 may be the first communication device or the second communication device of the embodiments of the present disclosure, and the communication device 1600 may implement corresponding processes implemented by the first communication device or the second communication device in each method of the embodiments of the present disclosure, which will not be repeated here for the sake of brevity.

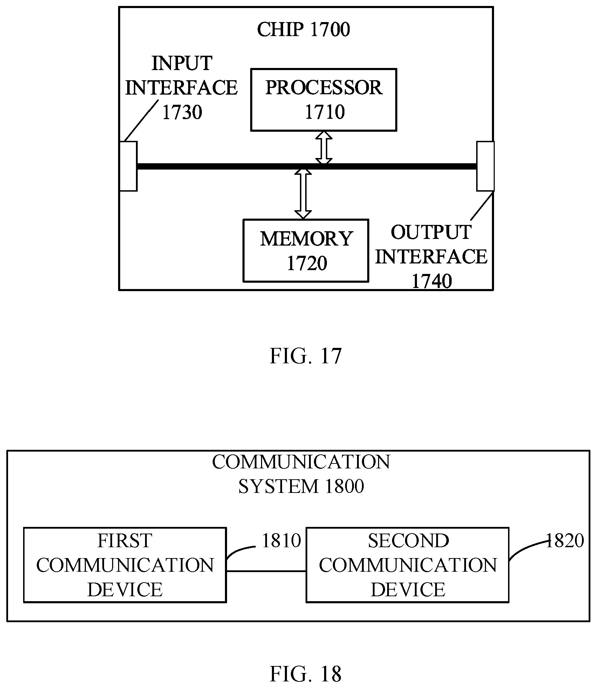

FIG. 17 is a schematic structural diagram of a chip 1700 according to embodiments of the present disclosure. The chip 1700 includes a processor 1710, and the processor 1710 can call and run a computer program from a memory to implement the methods in the embodiments of the present disclosure.

In an embodiment, the chip 1700 may further include a memory 1720. The processor 1710 may call and run a computer program from the memory 1720 to implement the methods executed by the terminal device or the network device in the embodiments of the present disclosure.

The memory 1720 may be a separate device independent of the processor 1710, or may be integrated into the processor 1710.

In an embodiment, the chip 1700 may further include an input interface 1730. The processor 1710 can control the input interface 1730 to communicate with other devices or chips, and specifically, can obtain information or data sent by other devices or chips.

In an embodiment, the chip 1700 may further include an output interface 1740. The processor 1710 can control the output interface 1740 to communicate with other devices or chips, and specifically, can output information or data to other devices or chips.

In an embodiment, the chip can be applied to the first communication device or the second communication device in the embodiments of the present disclosure, and the chip can implement corresponding processes implemented by the first communication device or the second communication device in the various methods of the embodiments of the present disclosure, which will not be repeated herein for the sake of brevity.

The chips applied to the first communication device and the second communication device may be the same chip or different chips.

It may be understood that, the chip mentioned in the embodiments of the present disclosure may also be called a system-level chip, a system chip, a chip system, or a system-on-chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor mentioned above may be a microprocessor or any conventional processor, etc.

The memory mentioned above may be a volatile memory or a non-volatile memory, or may include both volatile and non-volatile memories. The non-volatile memory may be a read-only memory (ROM), a programmable ROM (PROM), an erasable programmable ROM (EPROM), an electrically erasable programmable ROM (EEPROM), or a flash memory. The volatile memory may be a random access memory (RAM).

It may be understood that, the above-mentioned memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is to say, the memory in the embodiments of the present disclosure is intended to include but not limited to these and any other suitable types of memory.

FIG. 18 is a schematic block diagram of a communication system 1800 according to embodiments of the present disclosure. The communication system 1800 includes a first communication device 1810 and a second communication device 1820.

The first communication device 1810 is configured to receive first configuration information, where the first configuration information indicates a sensing information reporting event. The second communication device 1820 is configured to send the first configuration information.

The first communication device 1810 may be configured to implement the corresponding functions implemented by the first communication device in the above methods, and the second communication device 1820 may be configured to implement the corresponding functions implemented by the second communication device in the above methods, which will not be repeated here for the sake of brevity.

The above embodiments may be implemented in whole or in part by software, hardware, firmware or any combination thereof. When implemented using software, the embodiments can be implemented in whole or in part in the form of a computer program product. The computer program product includes one or more computer instructions. When the computer program instructions are loaded and executed on a computer, the processes or functions of the embodiments of the present disclosure are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from a website, computer, server or data center by a wired mode (e.g., coaxial cable, optical fiber, digital subscriber line (DSL)) or wireless mode (e.g., infrared, wireless, microwave, etc.) to another website, computer, server, or data center. The computer-readable storage medium may be any available medium that a computer can access or a data storage device such as a server or data center that integrates with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

It may be understood that, in the various embodiments of the present disclosure, the magnitude of the serial numbers of the above-mentioned processes does not mean the order of execution. The order of execution of various processes should be determined by functions and internal logic of various processes, and should not constitute any limitation on the implementation process of the embodiments of the present disclosure.

Those skilled in the art can clearly understand that, for the convenience and brevity of illustration, for the specific operation processes of the systems, devices, and units described above, reference can be made to corresponding processes in the aforementioned method embodiments, which will not be repeated here.

The above is only specific implementations of the present disclosure, but the protection scope of the present disclosure is not limited thereto. Any person skilled in the art who is familiar with the present technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A method for reporting sensing information, comprising:
receiving, by a first communication device, first configuration information, wherein the first configuration information indicates a sensing information reporting event.

2. The method of claim 1, wherein the first configuration information comprises at least one of:
a sensing information threshold;
a sensing information variation threshold;
a triggered sensing information reporting timer; or
a triggered sensing information reporting counter.

3. The method of claim 1 or 2, wherein the sensing information reporting event corresponding to the first configuration information comprises at least one of:
a signal strength obtained by measuring a sensing reference signal (RS) is less than, greater than, or equal to a configured signal strength threshold;
a signal strength variation obtained by measuring the sensing RS is less than, greater than, or equal to a configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

4. The method of any one of claims 1 to 3, wherein the first configuration information is in a first message, wherein the first message is sent via radio resource control (RRC) signaling and/or non-access stratum (NAS) signaling.

5. The method of claim 4, wherein the first message is a RequestSensingInformation message.

6. The method of any one of claims 1 to 5, further comprising:
receiving, by the first communication device, second configuration information, wherein the second configuration information is used to configure a sensing RS.

7. The method of claim 6, wherein the second configuration information is in a second message, wherein the second message is sent via RRC signaling and/or NAS signaling.

8. The method of claim 7, wherein the second message is a ProvideAssistanceData message.

9. The method of any one of claims 6 to 8, wherein the second configuration information carries information of a second communication device that sends the sensing RS.

10. The method of claim 9, wherein the second communication device comprises at least one of:
a network device;
a terminal device that sends the first message; or
a terminal device that receives the first message.

11. The method of any one of claims 1 to 10, further comprising:
receiving, by the first communication device, third configuration information, wherein the third configuration information indicates requested sensing information.

12. The method of claim 11, wherein the third configuration information indicates at least one of the following sensing information requested by a second communication device:
original channel information;
basic measurements;
an attribute of a sensing target; or
a status of the sensing target.

13. The method of claim 11 or 12, wherein the third configuration information is in a third message, wherein the third message is sent via RRC signaling and/or NAS signaling.

14. The method of claim 13, wherein the third message is a RequestSensingInformation message.

15. The method of any one of claims 1 to 14, further comprising:
measuring, by the first communication device, a sensing RS to obtain sensing information.

16. The method of any one of claims 1 to 15, further comprising:
sending, by the first communication device, sensing information to a second communication device when the sensing information satisfies the sensing information reporting event.

17. The method of claim 16, wherein the sensing information is in a ProvideSensingInformation message.

18. The method of any one of claims 1 to 17, further comprising:
sending, by the first communication device, indication information to the second communication device when sensing information does not satisfy the sensing information reporting event, wherein the indication information indicates a variation in the sensing information.

19. The method of claim 18, wherein the indication information is in a ProvideSensingInformation message.

20. A method for reporting sensing information, comprising:
sending, by the second communication device, first configuration information, wherein the first configuration information indicates a sensing information reporting event.

21. The method of claim 20, wherein the first configuration information comprises at least one of:
a sensing information threshold;
a sensing information variation threshold;
a triggered sensing information reporting timer; or
a triggered sensing information reporting counter.

22. The method of claim 20 or 21, wherein the sensing information reporting event corresponding to the first configuration information comprises at least one of:
a signal strength obtained by measuring a sensing reference signal (RS) is less than a configured signal strength threshold;
the signal strength obtained by measuring the sensing RS is greater than or equal to the configured signal strength threshold;
a signal strength variation obtained by measuring the sensing RS is less than a configured signal strength variation threshold;
the signal strength variation obtained by measuring the sensing RS is greater than or equal to the configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

23. The method of any one of claims 20 to 22, wherein the first configuration information is in a first message, wherein the first message is sent via RRC signaling and/or non-access stratum (NAS) signaling.

24. The method of claim 23, wherein the first message is a RequestSensingInformation message.

25. The method of any one of claims 20 to 24, further comprising:
sending, by the second communication device, second configuration information, wherein the second configuration information is used to configure a sensing RS.

26. The method of claim 25, wherein the second configuration information is in a second message, wherein the second message is sent via RRC signaling and/or NAS signaling.

27. The method of claim 26, wherein the second message is a ProvideAssistanceData message.

28. The method of any one of claims 25 to 27, wherein the second configuration information carries information of a second communication device that sends the sensing RS.

29. The method of claim 28, wherein the second communication device comprises at least one of:
a network device;
a terminal device that sends the first message; or
a terminal device that receives the first message.

30. The method of any one of claims 20 to 29, further comprising:
sending, by the second communication device, third configuration information, wherein the third configuration information indicates requested sensing information.

31. The method of claim 30, wherein the third configuration information indicates at least one of the following sensing information requested by the second communication device:
original channel information;
basic measurements;
an attribute of a sensing target; or
a status of the sensing target.

32. The method of claim 30 or 31, wherein the third configuration information is in a third message, wherein the third message is sent via RRC signaling and/or NAS signaling.

33. The method of claim 32, wherein the third message is a RequestSensingInformation message.

34. The method of any one of claims 20 to 33, further comprising:
receiving, by the second communication device, sensing information sent by a first communication device when the sensing information satisfies the sensing information reporting event.

35. The method of claim 34, wherein the sensing information is in a ProvideSensingInformation message.

36. The method of any one of claims 20 to 35, further comprising:
receiving, by the second communication device, indication information sent by a first communication device when sensing information does not satisfy the sensing information reporting event, wherein the indication information indicates a variation in the sensing information.

37. The method of claim 36, wherein the indication information is in a ProvideSensingInformation message.

38. A first communication device, comprising:
a first receiving unit configured to receive first configuration information, wherein the first configuration information indicates a sensing information reporting event.

39. The first communication device of claim 38, wherein the first configuration information comprises at least one of:
a sensing information threshold;
a sensing information variation threshold;
a triggered sensing information reporting timer; or
a triggered sensing information reporting counter.

40. The first communication device of claim 38 or 39, wherein the sensing information reporting event corresponding to the first configuration information comprises at least one of:
a signal strength obtained by measuring a sensing reference signal (RS) is less than a configured signal strength threshold;
the signal strength obtained by measuring the sensing RS is greater than or equal to the configured signal strength threshold;
a signal strength variation obtained by measuring the sensing RS is less than a configured signal strength variation threshold;
the signal strength variation obtained by measuring the sensing RS is greater than or equal to the configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

41. The first communication device of any one of claims 38 to 40, wherein the first configuration information is in a first message, wherein the first message is sent via RRC signaling and/or non-access stratum (NAS) signaling.

42. The first communication device of claim 41, wherein the first message is a RequestSensingInformation message.

43. The first communication device of any one of claims 38 to 42, further comprising:
a second receiving unit configured to receive second configuration information, wherein the second configuration information is used to configure a sensing RS.

44. The first communication device of claim 43, wherein the second configuration information is in a second message, wherein the second message is sent via RRC signaling and/or NAS signaling.

45. The first communication device of claim 44, wherein the second message is a ProvideAssistanceData message.

46. The first communication device of any one of claims 43 to 45, wherein the second configuration information carries information of a second communication device that sends the sensing RS.

47. The first communication device of claim 46, wherein the second communication device comprises at least one of:
a network device;
a terminal device that sends the first message; or
a terminal device that receives the first message.

48. The first communication device of any one of claims 38 to 47, further comprising:
a third receiving unit configured to receive third configuration information, wherein the third configuration information indicates requested sensing information.

49. The first communication device of claim 48, wherein the third configuration information indicates at least one of the following sensing information requested by a second communication device:
original channel information;
basic measurements;
an attribute of a sensing target; or
a status of the sensing target.

50. The first communication device of claim 48 or 49, wherein the third configuration information is in a third message, wherein the third message is sent via RRC signaling and/or NAS signaling.

51. The first communication device of claim 50, wherein the third message is a RequstSensingInformation message.

52. The firs communication device of any one of claims 38 to 51, further comprising:
a processing unit configured to measure a sensing RS to obtain sensing information.

53. The first communication device of any one of claims 38 to 52, further comprising:
a first sending unit configured to send sensing information to a second communication device when the sensing information satisfies the sensing information reporting event.

54. The first communication device of claim 53, wherein the sensing information is in a ProvideSensingInformation message.

55. The first communication device of any one of claims 38 to 54, further comprising:
a second sending unit configured to send an indication information to a second communication device when sensing information does not satisfy the sensing information reporting event, wherein the indication information indicates a variation in the sensing information.

56. The first communication device of claim 55, wherein the indication information is in a ProvideSensingInformation message.

57. A second communication device, comprising:
a first sending unit configured to send first configuration information, wherein the first configuration information indicates a sensing information reporting event.

58. The second communication device of claim 57, wherein the first configuration information comprises at least one of:
a sensing information threshold;
a sensing information variation threshold;
a triggered sensing information reporting timer; or
a triggered sensing information reporting counter.

59. The second communication device of claim 57 or 58, wherein the sensing information reporting event corresponding to the first configuration information comprises at least one of the following:
a signal strength obtained by measuring a sensing reference signal (RS) is less than, greater than, or equal to a configured signal strength threshold;
a signal strength variation obtained by measuring the sensing RS is less than, greater than, or equal to a configured signal strength variation threshold;
a delay variation obtained by measuring the sensing RS is greater than or equal to a configured delay variation threshold;
a Doppler shift variation obtained by measuring the sensing RS is greater than or equal to a configured frequency shift variation threshold;
an original channel information variation obtained by measuring the sensing RS is greater than or equal to a configured channel information variation threshold;
a variation of an element in a sensing information matrix obtained by measuring the sensing RS is greater than or equal to the signal strength variation threshold;
a value of a timer corresponding to a sensing target is greater than or equal to a value of a configured triggered sensing information reporting timer; or
a value of a counter corresponding to the sensing target is greater than a value of a configured triggered sensing information reporting counter.

60. The second communication device of any one of claims 57 to 59, wherein the first configuration information is in a first message, wherein the first message is sent via RRC signaling and/or non-access stratum (NAS) signaling.

61. The second communication device of claim 60, wherein the first message is a RequestSensingInformation message.

62. The second communication device of any one of claims 57 to 61, further comprising:
a second sending unit configured to send second configuration information, wherein the second configuration information is used to configure a sensing RS.

63. The second communication device of claim 62, wherein the second configuration information is in a second message, wherein the second message is sent via RRC signaling and /or NAS signaling.

64. The second communication device of claim 63, wherein the second message is a ProvideAssistanceData message.

65. The second communication device of any one of claims 62 to 64, wherein the second configuration information carries information of the second communication device that sends a sensing RS.

66. The second communication device of claim 65, wherein the second communication device comprises at least one of:
a network device;
a terminal device that sends the first message; or
a terminal device that receives the first message.

67. The second communication device of any one of claims 57 to 66, further comprising:
a third sending unit configured to send third configuration information, wherein the third configuration information indicates requested sensing information.

68. The second communication device of claim 67, wherein the third configuration information indicates at least one of the following sensing information requested by the second communication device:
original channel information;
basic measurements;
an attribute of a sensing target; or
a status of the sensing target.

69. The second communication device of claim 67 or 68, wherein the third configuration information is in a third message, wherein the third message is sent via RRC signaling and/or NAS signaling.

70. The second communication device of claim 69, wherein the third message is a RequestSensingInformation message.

71. The second communication device of any one of claims 57 to 70, further comprising:
a first receiving unit configured to receive sensing information sent by a first communication device when the sensing information satisfies the sensing information reporting event.

72. The second communication device of claim 71, wherein the sensing information is in a ProvideSensinginformation message.

73. The second communication device of any one of claims 57 to 72, further comprising:
a second receiving unit configured to receive indication information sent by a first communication device when sensing information does not satisfy the sensing information reporting event, wherein the indication information indicates a variation in the sensing information.

74. The second communication device of claim 73, wherein the indication information is in a ProvideSensingInformation message.

75. A communication device, comprising: a processor, a transceiver, and a memory, wherein the memory is configured to store a computer program, the processor is configured to control the transceiver to communicate with other devices, and the processor is configured to call and run the computer program stored in the memory to enable the communication device to execute the method of any one of claims 1 to 19 or 20 to 37.

76. A chip comprising: a processor configured to call and run a computer program from a memory, to enable a device equipped with the chip to execute the method of any one of claims 1 to 19 or 20 to 37.

77. A computer-readable storage medium configured to store a computer program which, when executed by a device, causes the device to perform the method of any one of claims 1 to 19 or 20 to 37.

78. A computer program product comprising computer program instructions for causing a computer to perform the method of any one of claims 1 to 19 or 20 to 37.

79. A computer program causing a computer to execute the method of any one of claims 1 to 19 or 20 to 37.
